# EUROPÄISCHE PATENTSCHRIFT

(11) **EP 3 014 736 B1**
(45) Veröffentlichungstag und Bekanntmachung des Hinweises auf die Patenterteilung: **08.01.2020**
(21) Anmeldenummer: 14741212.6
(22) Anmeldetag: 24.06.2014
(51) Int. Cl.: H02J 7/34, H01M 10/48, H02J 15/00, H01M 10/44, H01M 16/00

(54) **VERFAHREN UND VORRICHTUNG ZUR SPEICHERUNG ELEKTRISCHER ENERGIE IN ELEKTROCHEMISCHEN ENERGIESPEICHERN**
METHOD AND DEVICE FOR STORING ELECTRICAL ENERGY IN ELECTROCHEMICAL ENERGY ACCUMULATORS
PROCÉDÉ ET DISPOSITIF DE STOCKAGE D'ÉNERGIE ÉLECTRIQUE DANS DES ACCUMULATEURS D'ÉNERGIE ÉLECTROCHIMIQUES

(30) Priorität: 24.06.2013 DE 102013211951
(43) Veröffentlichungstag der Anmeldung: 04.05.2016
(73) Patentinhaber: Younicos GmbH, 12489 Berlin (DE)
(72) Erfinder: TRIEBEL, Clemens, 10243 Berlin (DE); REINCKE-COLLON, Carsten, 10439 Berlin (DE); BERNINGER, Udo, 12435 Berlin (DE)
(74) Vertreter: Maikowski & Ninnemann Patentanwälte Partnerschaft mbB
(86) Internationale Anmeldenummer: PCT/EP2014/063281
(87) Internationale Veröffentlichungsnummer: WO 2014/206983

(56) Entgegenhaltungen:
- EP-A1- 2 518 665
- WO-A1-2010/115006
- CN-U- 202 435 050
- US-A1- 2013 151 227

## Beschreibung

Die Erfindung betrifft ein Verfahren zur Speicherung elektrischer Energie in elektrochemischen Energiespeichern gemäß dem Oberbegriff des Anspruchs 1 und eine Vorrichtung zur Durchführung des Verfahrens.

Zur Sicherung einer nachhaltigen Energieversorgung steigt der Anteil erneuerbarer Energien durch den zunehmenden Anteil an Wind- und Solarkraftwerken. Da die Regelung von Energieversorgungsnetzen zur Bereitstellung einer konstanten Netzspannung und Netzfrequenz derzeit durch konventionelle Kraftwerke mit rotierenden elektrischen Generatoren erfolgt, die auch dann mit den Energieversorgungsnetzen verbunden bleiben, wenn die aus Wind und Sonne bereitgestellte Energie zur Versorgung der an die Energieversorgungsnetze angeschlossenen Verbraucher ausreichen würde, müssen die Wind- und Solarkraftwerke abgeregelt werden, so dass der Anteil, den erneuerbare Energien zur Energieversorgung beitragen können, limitiert ist. Um diese Limitierung aufzuheben, wird ein System zur Energiespeicherung und Netzregelung in elektrischen Energieversorgungsnetzen benötigt, das sowohl die Aufgaben der Netzregelung übernehmen kann und dadurch ein Abschalten konventioneller Kraftwerke erlaubt, als auch ausreichend Energie in ein Energieversorgungsnetz einspeist, wenn die aus Wind und Sonne bereitgestellte Energie zur Versorgung der an die Energieversorgungsnetze angeschlossenen Verbraucher nicht ausreicht.

Zur Energiespeicherung werden in einem derartigen System wegen der schnellen Verfügbarkeit elektrischer Leistung vorzugsweise elektrochemische Energiespeichersysteme eingesetzt, die sich unter elektrotechnischen Gesichtspunkten im Wesentlichen durch die C-Rate unterscheiden, d. h. dem Verhältnis von Leistung und Energie. Diese Unterschiede ergeben sich hauptsächlich aufgrund unterschiedlicher Akkumulator-Technologien mit verschiedenen Elektrodenkombinationen wie Blei-Säure-Akkumulator, Natrium basierende Hochtemperaturbatterien, Lithium-Ionen-Akkumulatoren, Redox-Flow-Batterien etc. Aber auch aufgrund von Unterschieden im Design- und Herstellungsverfahren der einzelnen Hersteller von elektrochemischen Energiespeichern ergeben sich selbst bei ähnlicher Zellchemie erhebliche Unterschiede. Weiterhin unterscheiden sich elektrochemische Energiespeichersysteme in sekundären Merkmalen wie Alterungsverhalten, Zyklenfestigkeit, Zyklentiefe, Eigenverbrauch, Selbstentladung und anderen Gesichtspunkten.

Ein weiterer wesentlicher elektrotechnischer Gesichtspunkt ist die gleichspannungsseitige Ausgangsspannung sowie die Varianz der Spannung zwischen geladenem und entladenem Zustand der elektrochemischen Energiespeichersysteme. Dabei erfordern und ermöglichen die elektrotechnischen Merkmale wie Leistung, Spannung und Spannungsvarianz eine Vielzahl von topologischen Anschlussmöglichkeiten leistungselektronischer Komponenten wie DC-DC-Hochsetzer und DC-AC-Umrichter.

Um den elektrotechnischen Anforderungen an ein Gesamtsystem optimal zu genügen, ist eine Kombination aus verschiedenen elektrochemischen Energiespeichersystemen mit unterschiedlichen C-Raten wünschenswert. Daraus ergibt sich aber auch eine Vielzahl an Varianten von Topologien leistungselektronischer Komponenten.

So ist aus der DE 100 18 943 A1 ein Photovoltaik-Inselsystem mit einem Photovoltaik-Generator bekannt, der einerseits über einen Anpasswandler und einen bidirektionalen Lageregler mit einer Batterie verbunden ist und andererseits über einen Inselwechselrichter ausgangsseitig eine Wechselspannung bereitstellt. Das Energiemanagement erfolgt hierbei über eine Steuer- und Regeleinrichtung.

Aus der EP 1 986 306 A1 ist ein Energieversorgungssystem bekannt, bei dem die von Photovoltaikanlagen erzeugte Energie in mehreren Speicherbatterieeinheiten gespeichert wird, denen ein Wechselrichter zur Ankopplung des Energieversorgungssystems an ein Wechselspannungs-Energieversorgungsnetz nachgeschaltet ist. Mittels einer Steuereinheit wird die Zuschaltung der einzelnen Speicherbatterieeinheiten an das Energieversorgungsnetz gesteuert.

Aus der US 2011/029 16 06 A1 ist ein Energiespeichersystem mit einem Managementsystem bekannt, das zwei Hochsetzsteller, einen Wechselrichter, eine Steuereinheit und ein Batteriemanagementsystem umfasst.

Aus der AT 509 888 A4 ist ein Verfahren zum Regeln elektrischer Energiespeicher bekannt, die aus mehreren, mit jeweils einem DC/DC-Wandler mit Schalthysterese verbundenen Batterieeinheiten (Zellstacks) bestehen. Zur Optimierung der Effizienz werden die einzelnen elektrischen Energiespeicher gezielt ein- und ausgeschaltet, wobei unterschiedliche Schalthysteresen dadurch erzielt werden, dass die Schalthysteresen der DC/DC-Wandler mit unterschiedlichen Schaltpunkten parametrisiert werden. Weiterhin ist eine dynamische Anpassung der Lade- und Entladekurven der elektrischen Energiespeicher in Abhängigkeit vom SOC (State of Charge) und SOH (State of Health) einzelner Energiespeicher oder des Gesamtsystems durch eine zentrale Steuereinheit vorgesehen.

Bei einem aus vielen elektrischen Energiespeichern zusammengesetzten Gesamtsystem und insbesondere bei einer Erweiterung des Gesamtsystems unter Einbeziehung weiterer, auch räumlich entfernt angeordneter elektrischer Energiespeicher tritt das Problem auf, dass die zentrale Steuereinheit die spezifischen Eigenschaften jedes des elektrischen Energiespeichers kennen und bei der Steuerung des Ladezustands der Energiespeicher und des Gesamtsystems berücksichtigen muss, was zu einem erheblichen Aufwand bei der Programmierung der zentralen Steuereinheit und einer signifikanten Störanfälligkeit des Gesamtsystems führt.

Aus der Literaturstelle Atcitty, S. [et al.]: Summary of State-of-the Art Power Conversion Systems for Energy Storage Applications (SANDIA REPORT SAND98-2019, September 1998) ist eine Zusammenstellung einer Vielzahl leistungselektronischer Umrichtersysteme mit in Reihe oder parallel geschalteten Wechselrichtern und Gleichstomstellern bekannt, die bidirektional mit einer Steuereinheit verbunden und einerseits an eine Energiespeichereinheit und andererseits an ein Energieversorgungsnetz bzw. eine Wechselspannungslast angeschlossen sind.

Bei der Zusammensetzung eines Gesamtsystems aus einer Vielzahl einzelner Umrichtersysteme bzw. einer Erweiterung eines derartigen Gesamtsystems unter Einbeziehung zusätzlicher Umrichtersysteme tritt jedoch ebenfalls das Problem auf, dass die Steuereinheiten der einzelnen Umrichtersysteme zum Erhalt eines vorgegebenen Ladezustands des Gesamtsystems und der Kapazität der einzelnen Energiespeicher mit einer zentralen Steuereinheit verbunden werden müssen, die die spezifischen Eigenschaften der Umrichtersysteme kennen und bei der Steuerung des Ladezustands der Energiespeichersysteme und des Gesamtsystems berücksichtigen muss, was den Programmierungsaufwand und die Störanfälligkeit des Gesamtsystems erhöht bzw. zu Lebensdauereinschränkungen der Energiespeicher führt.

Aus der US 2013 / 015227 A ist ein Verfahren zum Überprüfen des Zustands eines in ein Energiespeichersystem integrierten Batteriesystems bekannt, mit dem ein stabiler Betrieb des zwischen einem Stromerzeugungssystem, einem Energieverteilungsnetz und einer Last angeordneten Energiespeichersystem sichergestellt werden soll. Das Energiespeichersystem umfasst das Batteriesystem und ein Energieumwandlungssystem, das die Leistung des Energieerzeugungssystems, des elektrischen Energieverteilungsnetzes und des Batteriesystems in eine geeignete Form der Leistung umwandelt. Hierzu enthält das Energiespeichersystem eine Energieumwandlungseinheit, eine Zwischenkreiseinheit, einen Wechselrichter, einen Konverter und einen integrierten Controller, der mit der Energieumwandlungseinheit, dem Wechselrichter, dem Konverter, dem Batteriesystem, dem Energieverteilungsnetz und der Last verbunden ist und Signale von der Zwischenkreiseinheit zur Überwachung der Zustände des Energieerzeugungssystems, des elektrischen Energieverteilungsnetzes, des Batteriesystems und der Last empfängt und entsprechend den Überwachungsergebnissen die Energieumwandlungseinheit, den Wechselrichter, den Umrichter und das Batteriesystem in Abhängigkeit von der Energieerzeugung und Energieerzeugungsmenge des Energieerzeugungssystem, des Ladezustands (SOC) des Batteriesystems, der von der Last verbrauchten Energiemenge ansteuert.

Der vorliegenden Erfindung liegt die Aufgabenstellung zugrunde, ein Verfahren und eine Vorrichtung zur Speicherung elektrischer Energie in elektrochemischen Energiespeichern und zum Austausch elektrischer Energie mit einem elektrischen Energieversorgungsnetz der eingangs genannten Art bereitzustellen, das bzw. die den Einsatz unterschiedlicher elektrochemischer Energiespeicher mit einheitlichen Kommunikationsschnittstellen gewährleistet und den Einsatz unterschiedlicher Topologien leistungselektronischer Komponenten und elektrochemischer Energiespeicher unabhängig von der jeweils verwendeten Technologie der elektrochemischen Energiespeicher und Topologie der leistungselektronischen Komponenten zur Optimierung der Netzdienstleistung und Batterielebensdauer und Minimierung der Verluste in einem Hybridkraftwerk ermöglicht.

Diese Aufgabenstellung wird erfindungsgemäß durch ein Verfahren mit den Merkmalen des Anspruchs 1 gelöst.

Die erfindungsgemäße Lösung stellt ein Verfahren zur Speicherung elektrischer Energie in elektrochemischen Energiespeichern und zum Austausch elektrischer Energie mit einem elektrischen Energieversorgungsnetz bereit, das den Einsatz unterschiedlicher elektrochemischer Energiespeicher mit einheitlichen Kommunikationsschnittstellen gewährleistet und den Einsatz unterschiedlicher Topologien leistungselektronischer Komponenten und elektrochemischer Energiespeicher unabhängig von der jeweils verwendeten Technologie der elektrochemischen Energiespeicher durch Abstraktion der topologie- und speicherspezifischen Eigenschaften ermöglicht, so dass ein Hybridkraftwerk aus unterschiedlich konfigurierten, an einem Netzanschlusspunkt des elektrischen Energieversorgungsnetzes und an den Kommunikationsschnittstellen zu einem übergeordneten Batteriekraftwerk-Managementsystem sich aber identisch verhaltenden Speichereinheiten bzw. Modulen zusammengesetzt werden kann.

Durch den Transfer die spezifischen Daten und Merkmale der elektrochemischen Energiespeicher und der Topologie des Leistungselektroniksystems in für das elektrische Energieversorgungsnetz spezifische Daten und Merkmale werden
- regelungstechnische Probleme zur Realisierung des gewünschten elektrischen Verhaltens durch parallel betriebene und dezentral geregelte Wechselrichter transferiert,
- geeignete Betriebsführungskonzepte von Hybridkraftwerken, d.h. Kraftwerken, die mit Batterien unterschiedlicher Batterietechnologien wie Natrium-Schwefel-Batterien, Lithium-Ionen-Batterien. Speicher auf Basis von Vanadium-Redox-Flow oder Brennstoffzellen ausgestattet sind, bereitgestellt sowie
- einheitliche bzw. abstrakte Kommunikationsschnittstellen geschaffen, die einen Betrieb und die Abbildung von Batterien und Batteriekraftwerken erlauben, die unabhängig von speziellen technischen Ausführungsvarianten sind.

Insbesondere werden die spezifischen Daten und Merkmale der elektrochemischen Energiespeicher und der Topologie des Leistungselektroniksystems in einer abstrakten AC-Batterie zusammengefasst und in die Daten und Merkmale des elektrischen Energieversorgungsnetzes transferiert, wobei die AC-Batterie mittels eines AC-Batteriemanagements gesteuert, überwacht und geregelt wird. Dabei bildet die AC-Batterie die für die jeweils eingesetzte Batterietechnologie charakterisierenden Größen wie Lade- und Entladestrom, Kapazität, Ladezustand und dergleichen in für das elektrische Energieversorgungsnetz relevante Größen wie aktuell verfügbare und maximal erbringbare Leistung und aktuell aufnehmbare und abgebbare Energie durch Transformation der die Batterietechnologie charakterisierenden Größen ab.

Mit der Bereitstellung eines im Unterschied zu einer DC-Batterie als AC-Batterie bezeichneten Basismoduls wird eine regelungstechnisch einheitliche Schnittstelle an ein Gesamtsystem geliefert, die die Voraussetzungen für einen Einsatz unterschiedlicher Topologien leistungselektronischer Komponenten und elektrochemischer Energiespeicher mit unterschiedlicher Technologie schafft.

Durch die abstrahierende Funktion des AC-Batteriemanagements bzw. die Aufteilung in batteriespezifische Funktionalität wird eine optimierte Betriebsführung auf der Grundlage abstrakter Batteriemodelle in Verbindung mit einem Batteriekraftwerksmanagement geschaffen. Dabei ermöglichen die sich energietechnisch einheitlich verhaltenden AC-Batterien die Auslegung eines Kraftwerksmanagements, das mit unterschiedlichen Batterietechnologien ohne technologiespezifische Anpassungen seine Aufgabe beispielsweise als Hybridkraftwerk erfüllen kann.

Die Definition von AC-Batterien, die gleiche oder unterschiedliche Topologien von Leistungselektroniksystemen wie Wechselrichter, Umrichter und Gleichstromsteller, und gleiche oder unterschiedliche chemische und/oder physikalische Eigenschaften aufweisende Gleichstrombatterien unter Einschluss von Brennstoffzellen enthalten und die sich an ihren Netzanschlusspunkten und bezüglich ihrer Kommunikationsschnittstellen mit einem übergeordneten Batteriekraftwerk-Managementsystem aber identisch verhalten, ermöglicht eine einfache Steuerung eines aus vielen AC-Batterien zusammengesetzten Gesamtsystems, eine Minimierung der Störanfälligkeit des Gesamtsystems aufgrund einer definierten Steuerung und Erfassung des Ladezustands (SOC) und Funktionszustandes (SOH) jeder einzelnen AC-Batterie und eine problemlose Erweiterung des Gesamtsystems durch Einbeziehung gleichartiger AC-Batterien auch bei deren räumlich entfernter Anordnung sowie einen beliebigen Austausch einzelner AC-Batterien, ohne dass an dem bzw. den Netzanschlusspunkt(en) eine Veränderung auftritt.

Eine Vorrichtung zur Durchführung des Verfahrens zur Speicherung elektrischer Energie in elektrochemischen Energiespeichern und zum Austausch elektrischer Energie mit einem elektrischen Energieversorgungsnetz über ein die elektrochemischen Energiespeicher mit dem elektrischen Energieversorgungsnetz verbindendes Leistungselektroniksystem ist durch mindestens ein Basismodul (AC-Batterien) mit
- einem elektrochemischen Energiespeichermodul mit gleiche chemische und/oder physikalische Eigenschaften aufweisenden Gleichstrombatterien (DC-Batterien),
- einem die DC-Batterien steuernden und überwachenden Batteriemanagementsystem,
- einem Leistungselektronikmodul,
- einer Leistungselektronikmodul-Regeleinrichtung und
- einem AC-Batterie-Management mit Kommunikationsschnittstellen zum Batteriemanagementsystem
gekennzeichnet.

### Fortsetzung Seite 7 der WO 2014 / 206983

Die AC-Batterie als funktionales Element eines Energieversorgungsnetzes realisiert somit über ein generisches Modell der batterietypischen Betriebsgrenzen und Phänomene eine einheitliche Abbildung der Gleichstromquelle für eine energietechnische Anwendung, insbesondere
- eine Abbildung der Abhängigkeit der Kapazität vom Betriebsregime,
- Berücksichtigung der Unschärfe der Ladezustandsbestimmung unter Berücksichtigung von Kalibrierungszyklen,
- eine einheitliche Parametrierung des Wechselspannungsverhaltens, insbesondere der Regelung der leistungselektronischen Komponenten und
- eine Abbildung von für Batterietechnologien relevanten sowie spezifischen Zusammenhängen zwischen Größen wie Strom, Amperestunden, Ladezustand (SOC) in für ein Energieversorgungssystem relevante Größen wie aktuell verfügbare und maximal erbringbare Leistung und aktuell aufnehmbare und abgebbare Energie vermöge geeigneter Transformationen der Batteriegrößen.

Dabei besteht eine AC-Batterie aus mindestens einem DC-AC-Umrichter und gleichspannungsseitig daran angeschlossenen weiteren leistungselektronischen Komponenten und Batterieeinheiten und dient konzeptionell als Entkopplungsebene zwischen einem Managementsystem für das Gesamtsystem zur Aufnahme, Speicherung und Abgabe elektrischer Energie an ein elektrisches Energieversorgungsnetz und der batterietechnologiespezifischen Kombination von leistungselektronischen Komponenten, DC-Batterien und je nach Ausführungsvariante einem Transformator und bildet das Äquivalent zu einer DC-Batterien aus Sicht der elektrischen Energietechnik.

Grundsätzlich besteht die AC-Batterie aus
- einer DC-Batterie mit dazugehörigem Batteriemanagementsystem,
- einem Wechselrichter mit Wechselrichterregelung,
- einem AC-Batterie-Managementsystem und
- im Falle einer Auslegung als Mittelspannungsbatterie entweder zusätzlich aus einem Mittelspannungstransformator mit Leistungsschalter auf der Mittelspannungsseite bzw. bei Verwendung eines Mittelspannungswechselrichters lediglich zusätzlich aus einem Leistungsschalter auf der Mittelspannungsseite.

Die vorstehend genannten Komponenten einer AC-Batterie stellen Platzhalter für ausführungsspezifisch komplexere Teilkomponenten dar, so dass sich abhängig von der jeweiligen Batterietechnologie unterschiedliche Topologien für Wechselrichter und DC-Batterien aus unterschiedlichen Randbedingungen wie beispielsweise dem ladezustandsabhängigen Spannungshub von DC-Batterien oder der notwendigen Zwischenkreisspannung für die Ausgangsspannung der Wechselrichter ergeben.

Aus den unterschiedlichen Randbedingungen ergeben sich beispielsweise folgende Varianten:
In einer ersten Variante weisen die AC-Batterien mehrere parallel geschaltete elektrochemische Energiespeichermodule mit gleiche chemische und/oder physikalische Eigenschaften aufweisenden DC-Batterien und mit einem jedem elektrochemischen Energiespeichermodul zugeordneten, das elektrochemische Energiespeichermodul steuernden und überwachenden Batteriemanagementsystem auf.

In einer zweiten Variante weisen die AC-Batterien mehrere gruppenweise parallel geschaltete elektrochemische Energiespeichermodule mit gleiche chemische und/oder physikalische Eigenschaften aufweisenden DC-Batterien und mit einem jedem elektrochemischen Energiespeichermodul zugeordneten, jedes elektrochemische Energiespeichermodul steuernden und überwachenden Batteriemanagementsystem auf, wobei die gruppenweise parallel geschalteten elektrochemischen Energiespeichermodule über einen jeder Gruppe zugeordneten Hochsetzsteller mit einem Wechselrichter verbunden sind.

Alternativ weisen die AC-Batterien mehrere parallel geschaltete elektrochemische Energiespeichermodule mit unterschiedliche chemische und/oder physikalische Eigenschaften aufweisenden DC-Batterien und mit einem jedem elektrochemischen Energiespeichermodul zugeordneten, das elektrochemische Energiespeichermodul steuernden und überwachenden Batteriemanagementsystem auf.

In dieser Ausführungsform können verschiedenartige DC-Batterien gruppenweise in einer AC-Batterie zusammengefasst werden, wobei dem AC-Batteriemanagement die Daten der jeweiligen DC-Batteriegruppen eingegeben oder vom AC-Batteriemanagement von den Batteriemanagementsystemen abgefragt werden, so dass das AC-Batteriemanagement die unterschiedlichen DC-Batteriegruppen entsprechend steuern und überwachen kann.

Die Leistungselektronikmodule können aus einem gleichstromseitig an die elektrochemischen Energiespeichermodule und wechselstromseitig unmittelbar als MittelspannungsWechselrichter oder über einen Mittelspannungstransformator und einen Mittelspannungs-Leistungsschalter an eine Sammelschiene oder einen Netzanschlusspunkt angeschlossenen Wechselrichter oder aus mindestens einem an die elektrochemischen Energiespeichermodule angeschlossenen Hochsetzsteller und einem gleichstromseitig an den oder die Hochsetzsteller und wechselstromseitig unmittelbar oder über einen Mittelspannungstransformator und einen Mittelspannungs-Leistungsschalter an eine Sammelschiene angeschlossenen Wechselrichter bestehen.

Zur Bereitstellung einer vorgegebenen Gleichspannung können die elektrochemischen Energiespeichermodule mehrere in Reihe geschaltete DC-Batterien mit gleichen chemischen und/oder physikalischen Eigenschaften aufweisen.

AC-Batterien können sowohl als Niederspannungs- als auch als Mittelspannungsbatterien in Verbindung mit unterschiedlichen Topologien leistungselektronischer Komponenten eingesetzt werden.

Als Mittelspannungsbatterien ausgebildete AC-Batterien enthalten - sofern der Wechselrichter nicht als Mittelspannungswechselrichter ausgeführt ist - einen mit dem Ausgang eines Leistungselektronikmoduls verbundenen Mittelspannungstransformator, der über einen Mittelspannungs-Leistungsschalter mit einer Sammelschiene oder einem Netzanschlusspunkt verbunden ist. Dabei enthalten die AC-Batterien zwei elektrochemische Energiespeichermodule mit gleiche chemische und/oder physikalische Eigenschaften aufweisenden DC-Batterien, die mit jeweils einem Wechselrichter verbunden sind, die an die Primärwicklungen eines sekundärseitig mit der Sammelschiene oder einem Netzanschlusspunkt verbundenen Dreiwicklungstransformator angeschlossen sind.

Die AC-Batterie ist in dieser Ausführungsform als Niederspannungsbatterie ausgebildet, bei der die DC-Batterien unmittelbar oder über einen Hochsetzsteller an einen Wechselrichter angeschlossen sind, wobei die AC-Batterie über einen Transformator und einen Leistungsschalter an eine Sammelschiene oder einen Netzanschlusspunkt angeschlossen wird.

Alternativ kann die AC-Batterie als Mittelspannungsbatterie ausgebildet sein, bei der die DC-Batterien unmittelbar oder über einen Hochsetzsteller an einen Wechselrichter angeschlossen sind, die aber den ggf. ausgeführten Mittelspannungstransformator und den Mittelspannungs-Leistungsschalter beinhaltet, so dass sie unmittelbar mit der Sammelschiene oder dem Netzanschlusspunkt verbunden werden kann.

Ein System bestehend aus mehreren AC-Batterien mit einem gemeinsamen Netzanschlusspunkt wird als Batteriekraftwerk bezeichnet, dessen Steuerung so beschaffen sein muss, dass zugesicherte netzseitige Systemdienstleistungen sichergestellt sind, indem die Einsatz- und Aufgabenverteilung auf die verschiedenen AC-Batterien zur Gewährleistung einer zuverlässigen und dauerhaften Funktionalität des Batteriekraftwerks optimiert wird.

Dabei erfüllt die AC-Batterie beim Einsatz in einem netzformenden Batteriekraftwerk, d.h. im Inselnetzbetrieb, beispielsweise eine Umsetzung der Merkmale
- Frequenzregelung in Abhängigkeit von der Wirkleistung, bei der sich die AC-Batterie gemäß einer Betriebsstatik ("droop") verhält und
- Spannungsregelung in Abhängigkeit von der Blindleistung.

Beim Einsatz der AC-Batterie in einem netzfolgenden Batteriekraftwerk bzw. Regelkraftwerk leistet die AC-Batterie beispielsweise
- einen frequenzabhängiger Wirkleistungsbeitrag und
- einen spannungsabhängigen Blindleistungsbeitrag.

Für jede Anwendung erfüllt die AC-Batterie eine
- Berücksichtigung der Betriebsgrenzen für Wechselrichter und DC-Batterien sowie der notwendigen Wartungsanforderungen, die sowohl technische Verfügbarkeitsgrenzen als auch regelmäßig notwendige Wartungen wie das Kalibrieren von Gleichstrom-Batteriemodulen oder Teilen davon zur verlässlichen Ladezustandsmessung oder das An- bzw. Abfahren von (Teil-)Batterien betreffen,
- Bereitstellung einer einheitlichen Schnittstelle zum übergeordneten Batteriekraftwerk-Managementsystem unabhängig von der speziellen Ausprägung der Wechselrichter-Batterietopologie und Batterietechnologie und
- Bereitstellung von Abschätzungen von Verfügbarkeitseinschränkungen bzw. Leistungs- und Energiebedarf für anstehende Wartungsvorgänge wie z.B. der Ladezustands-Kalibrierung von Gleichstrom-Batteriemodulen.

Da beim Einsatz in einem netzformenden Batteriekraftwerk (Inselnetzbetrieb) die parallel betriebenen AC-Batterien als parallele Spannungsquellen arbeiten, die sich die anfallende Last am Netzanschlusspunkt aufteilen, ergibt sich der Lastanteil jeder einzelnen AC-Batterie über die Parametrierung der Betriebsstatiken für Wirk- und Blindleistung über die Schnittstelle durch das Batteriekraftwerks-Managementsystem. Dies ermöglicht unter anderem auch den asymmetrischen Betrieb der einzelnen AC-Batterie, um beispielsweise eine Kalibrierung der Ladezustandsmessung vorzunehmen.

Dabei regelt ein als netzbildendes Kraftwerk ausgebildetes Batteriekraftwerk die Sammelschienenspannung und Sammelschienenfrequenz und stellt Kurzschlussströme zur Auslösung von Überstrom-Schutzmechanismen bereit.

Im Betrieb als netzfolgendes Batteriekraftwerk (z.B. Regelkraftwerk) arbeiten die parallel betriebenen AC-Batterien als parallele Stromquellen, die gemeinsam die am Netzanschlusspunkt geforderte Leistung - z.B. in Abhängigkeit von der Netzfrequenz gemäß einer geforderten Regelstatik - erbringen. Der Lastanteil jeder einzelnen AC-Batterie lässt sich über die einheitliche Schnittstelle durch das Batteriekraftwerks-Managementsystem parametrieren. Dies ermöglicht unter anderem auch den asymmetrischen Betrieb der einzelnen AC-Batterie, um beispielsweise eine Kalibrierung der Ladezustandsmessung vorzunehmen.

Neben der Bereitstellung von Wirkleistung können die parallelen AC-Batterien auch zur Spannungshaltung am Netzanschlusspunkt (Bereitstellung von Blindleistung im Rahmen einer Spannungsregelung an der Sammelschiene) verwendet werden.

Vorzugsweise ist das AC-Batterie-Managementsystem über Kommunikationsschnittstellen mit einem Batteriekraftwerk-Managementsystem verbunden, das die Mittelspannungs-Leistungsschalter und einen den Netzanschlusspunkt mit dem Energieversorgungsnetz verbindenden Leistungsschalter ansteuert.

Alternativ zur Erbringung von Netzsystemdienstleistungen oder als netzbildendes Kraftwerk kann das Batteriekraftwerk als Hybridkraftwerk im Verbund mit erneuerbaren Energiequellen betrieben werden und zum Beispiel im Lastfolgebetrieb die Einhaltung von Einspeisebegrenzungen am gemeinsamen Einspeisepunkt gewährleisten ("Peak-Shaving"), eine vorgegebene Leistung am Netzanschlusspunkt des Energieversorgungsnetzes in Abhängigkeit von der Netzfrequenz, eine Lastfolge oder dergleichen regeln.

Anhand mehrerer in der Zeichnung dargestellter Ausführungsbeispiele soll der der Erfindung zugrundeliegende Gedanke näher erläutert werden. Es zeigen:
- Fig. 1: eine schematische Darstellung der Zellenspannung von Lithium-Ionen-Batterien in Abhängigkeit vom Ladezustand für unterschiedliche konstante Endladeströme;
- Fig. 2: eine schematische Darstellung der Gleichstromleistung von Lithium-Ionen-Batterien in Abhängigkeit vom Ladezustand;
- Fig. 3: eine schematische Darstellung des Verlaufs der Ladespannung und des Ladestroms einer im Konstantstrom-Konstantspannungs-Ladezyklus vollgeladenen Lithium-Ionen-Zelle;
- Fig. 4: eine schematische Darstellung des Verlaufs der Ladeleistung einer Lithium-Ionen-Zelle sowie eine mögliche vereinfachte Abschätzung der Ladeleistung;
- Fig. 5 bis 8: Beispiele für zu einem Batteriekraftwerk zusammengefasste AC-Batterien mit unterschiedlichen Topologien der Leistungselektronikmodule und DC-Batterien mit teilweise verschiedenen Batterietechnologien und
- Fig. 9: eine schematische Darstellung eines Batteriekraftwerks, das aus mehreren, gegebenenfalls auch räumlich voneinander getrennt angeordneten, mit einem Batteriekraftwerk-Managementsystem zum Austausch von Daten und Steuersignalen verbundenen AC-Batterien besteht, die unterschiedlichen Topologien der Leistungselektronikmodule und DC-Batterien mit teilweise verschiedener Batterietechnologie aufweisen.

Elektrochemische Energiespeicher oder Batterien sind von ihrer Beschaffenheit DC-Systeme, die je nach Batterietechnologie ein unterschiedliches charakteristisches elektrisches Verhalten an einer elektrischen Schnittstelle zeigen.

So eignen sich Lithium-Ionen-Batterien mit ihrem sehr hohen Verhältnis von Leistung zu Energie (c-rate 1 und höher) besonders als Kurzzeitspeicher und für den Ausgleich großer kurzfristiger Schwankungen durch die Bereitstellung von Regelleistung.

Natrium-Schwefel-Batterien haben dagegen eine sehr hohe Speicherkapazität mit einer c-rate von 1/6. Damit eignen sich diese Hochtemperaturbatterien besonders für den Ausgleich täglicher Schwankungen von Wind- und Sonnenenergie.

Speicher auf Basis von Vanadium-Redox-Flow haben fast keine Selbstentladung, so dass sie sich unter anderem hervorragend als Saisonspeicher eignen. Weil der Energieträger von Vanadium-Redox-Flow-Batterien nicht altert oder verschleißt, sind sie bei geringem Wartungsaufwand nahezu unbegrenzt haltbar und je nach Anforderung können Leistung und Energie getrennt und flexibel skaliert werden

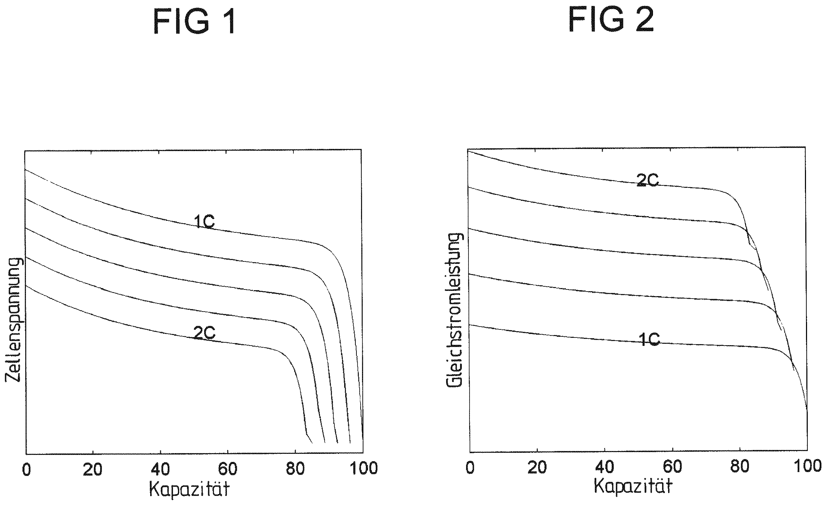

In den Fig. 1 bis 4 sind anhand der Eigenschaften von Lithium-Ionen-Batterien Beispiele für typische von einer AC-Batterie zu berücksichtigende Betriebsgrenzen und Eigenschaften von Batterien mit unterschiedlichen Batterietechnologien dargestellt.

Fig. 1 zeigt die Abhängigkeit der Zellenspannung V vom Ladezustand (Kapazität) für unterschiedliche konstante Entladeströme und Fig. 2 die korrespondierende Gleichstromleistung in Abhängigkeit vom Ladezustand bei unterschiedlichen konstanten Entladeströmen.

Beide qualitativ dargestellten Kennlinien von Lithium-Ionen-Batterien zeigen u. a. neben einer typischen, vom Ladezustand abhängigen Zellenspannung eine unterschiedliche Kapazität je nach Entladestrom. Darüber hinaus hängt die Zellalterung und damit auch die verbleibende Zellkapazität von unterschiedlichen Einflussfaktoren wie z. B. der Historie der Lade- und Entladeströme, dem vorherrschenden Ladezustand und den Temperaturverhältnissen ab.

Größere DC-Batterien bestehen aus einer geeigneten Verschaltung einzelner Zellen zu Modulen und mehrerer Module zu Batterien, sind aber in der Regel nicht für energietechnische Anwendungen vorbereitet, weil
- Ladeverfahren typischerweise nicht leistungs- sondern strom- und spannungsbezogen sind, d. h. nach außen stellt die Batterie bei idealen Ladezyklen variable Leistungsanforderungen, die vom Ladezustand abhängen,
- mit den Batterien verbundene Batteriemanagementsysteme liefern Batterieinformationen, wie die verbleibende Kapazität oder die gespeicherte Energiemenge nicht in Abhängigkeit vom Betriebsregime, sondern bezüglich eines Nominalbetriebs.

Die AC-Batterie als funktionales Element eines Batteriekraftwerks erfüllt somit die Aufgabe, über ein generisches Modell der batterietypischen Betriebsgrenzen und Phänomene eine einheitliche Abbildung der Gleichspannungsquelle für eine energietechnische Anwendung zu realisieren und umfasst u. a.
- eine Abbildung der Abhängigkeit der Kapazität vom Betriebsregime, d. h. der Energie in Abhängigkeit von der Leistung,
- eine Berücksichtigung der Unschärfe der Ladezustandsbestimmung unter Berücksichtigung von Kalibrierungszyklen,
- eine einheitliche Parametrierung des Wechselspannungsverhaltens durch entsprechende Regelung der Leistungselektronikkomponente.

Diese Kapselung batterietypischer Eigenschaften eines elektrochemischen Energiespeichers bzw. einer DC-Batterie sowie die Anforderungen an eine energietechnisch einheitliche AC-Batterie ermöglichen die Auslegung eines Kraftwerksmanagements, das mit unterschiedlichen Batterietechnologien ohne technologiespezifische Anpassungen seine Aufgabe beispielsweise als Hybridkraftwerk erfüllen kann.

Bei der Bestimmung des Ladezustands von Batteriesystemen wird davon ausgegangen, dass die Ladezustandsmessungen von Batteriesystemen in der Regel auf der Bildung einer Energiebilanz unter Berücksichtigung von Modellen für das aktuelle Zellenverhalten basieren. Alle Modelle gehen davon aus, dass die Ladezustandsmessung mit zunehmender Betriebsdauer einer mehr oder weniger stark ausgeprägten Drift unterliegt, so dass die Ladezustandsmessung eines Batteriesystems mit einer Unbestimmtheit belegt ist, die mit der Zeit stark zunimmt. Daher müssen alle Batteriesysteme regelmäßig definierte Ladezustände anfahren, beispielsweise eine Vollladung, um die Bestimmung des Ladezustands zu kalibrieren, wobei für die Durchführung der Kalibrierung das Batteriesystem ein festgelegtes Betriebsregime gefahren wird.

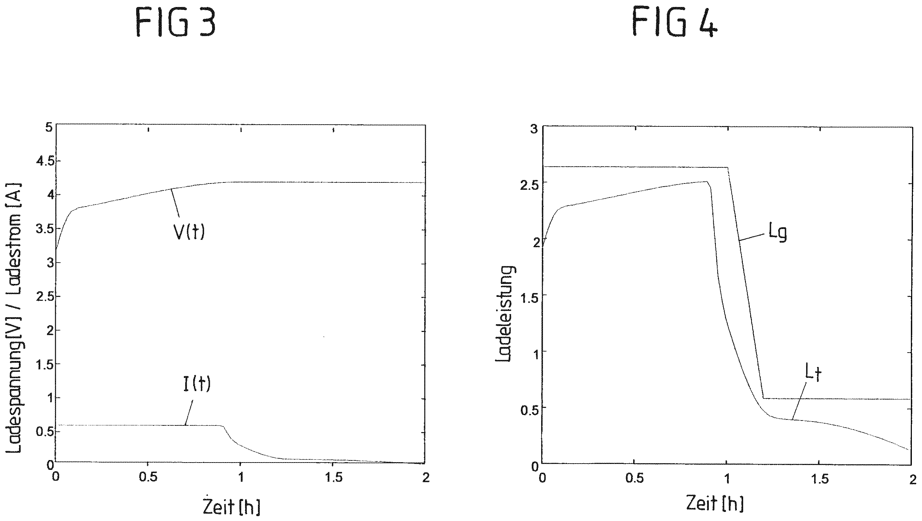

Als Beispiel hierfür ist in den Fig. 3 und 4 die Ladekurve einer Lithium-Ionen-Zelle dargestellt, die im Konstantstrom-Konstantspannung-Ladezyklus vollgeladen wird.

Fig. 3 zeigt den zeitlichen Verlauf der Ladespannung V sowie des Ladestroms I während eines Ladevorgangs, wobei in Abhängigkeit vom tatsächlichen Ladezustand die Kalibrierung des Ladezustandes bei einer anliegenden Zellenspannung Uₜ₀ von beispielsweise 3,2 V beginnt. Bis zum Einstellen einer konstanten Zellenspannung U_{K} von ca. 4,2 V benötigt die Lithium-Ionen-Zelle einen konstanten Ladestrom. Die hierfür notwendige, in Fig. 4 dargestellte tatsächliche Ladeleistung Pₜ (t) bei konstanter Ladespannung V und konstantem Ladestroms I steigt dabei proportional zur Zellenspannung an. Beim anschließenden Übergang zur Ladung mit konstanter Spannung bis zum Einstellen des Ladeendstroms fällt gemäß Fig. 4 die Ladeleistung stark ab und sinkt im Anschluss daran weiter proportional zum Ladestrom.

Damit ein dem AC-Batterie-Managementsystem übergeordnete Batteriekraftwerksmanagement den Einfluss der Kalibrierung des Ladezustands auf den Netzanschlusspunkt absichern kann, bietet die AC-Batterie mit der Anzeige des Wunsches einer Kalibrierung eine Abschätzung des Kalibrierungsfahrplans, d. h. des Verlaufs der Ladeleistung über der Zeit, an. Dies ist in Fig. 4 als Kurve P_{g}(t) dargestellt. Dabei ist zu beachten, dass es sich nur um eine Schätzung handeln kann, die mit größeren Abständen zwischen Ladezustandskalibrierungen und stark unterschiedlichen Betriebsregimen der AC-Batterie mit zunehmender Unbestimmtheit belegt sind.

Hiervon abweichende Eigenschaften gelten für Natrium-Schwefel-Batterien und Speicher auf Basis von Vanadium-Redox-Flow. Da die genauen Anforderungen an einen Speicher je nach Anwendungsfall und teilweise auch projektspezifisch variieren, was viele Eigenschaften, besonders aber das Verhältnis von Leistung und Energie betrifft, was sowohl bei Lithium-Ionen als auch bei Natrium-Schwefel-Batterien durch den grundsätzlichen Aufbau der Zellen vorgegeben ist, werden bei Bedarf unterschiedliche Technologien in einer hybriden Batterie kombiniert, so dass die Vorteile der unterschiedlichen Technologien genutzt werden können.

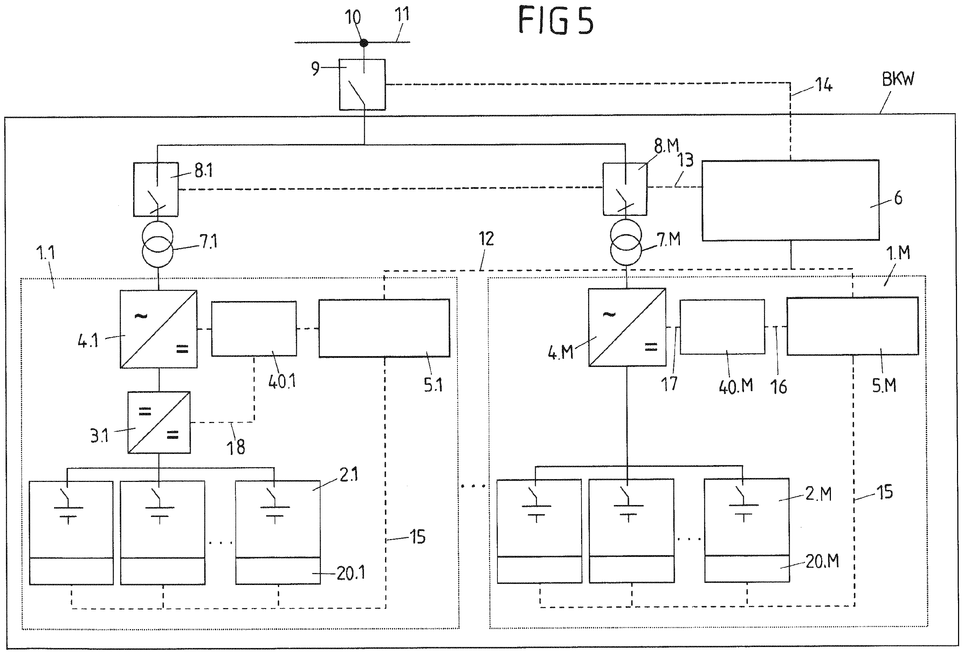

In den Fig. 5 bis 7 sind verschiedene Beispiele für zu einem Batteriekraftwerk zusammengefasste AC-Batterien mit unterschiedlichen Topologien der Leistungselektronikmodule, d. h. der Wechselrichter oder Umrichter bzw. Hochsetzsteller, und unterschiedlichen Batterietechnologien dargestellt, wobei die elektrischen Verbindungsleitungen in ausgezogenen Linien und die Kommunikationsverbindungen in gestrichelten Linien dargestellt sind.

Fig. 5 zeigt ein Blockschaltbild eines ersten Ausführungsbeispiels eines Batteriekraftwerks BKW mit M parallel an einen Netzanschlusspunkt 10 angeschlossenen, als Niederspannungsbatterien ausgebildeten AC-Batterien 1.1 bis 1.M, die jeweils über einen Transformator 7.1 bis 7.M, einen Leistungsschalter 8.1 bis 8.M und einen Netzanschluss-Leistungsschalter 9 mit dem Netzanschlusspunkt 10 eines Energieversorgungsnetzes 11 verbunden sind. Jede AC-Batterie 1.1 bis 1.M weist mehrere parallel geschaltete Gruppen DC-Batterien 2.1 bis 2.M auf, von denen jede Gruppe mehrere in Reihe geschaltete DC-Batterien umfassen kann. Jede der DC-Batterie-Gruppen 2.1 bis 2.M weist ein Batteriemanagementsystem 20.1 bis 20.M auf, die mit einem AC-Batteriemanagement 5.1 bis 5.M für jede AC-Batterie 1.1 bis 1.M verbunden sind.

Die Batteriemanagementsysteme 20.1 -20.M überwachen die DC-Batterien und stellen eine Kommunikationsschnittstelle zum AC-Batteriemanagement bereit.

Die erste AC-Batterie 1.1 weist einen mit den parallel geschalteten DC-Batteriegruppen 2.1 verbundenen Hochsetzsteller 3.1 auf, der mit einem Wechselrichter 4.1 verbunden ist, an den ein erster Transformator 7.1 angeschlossen ist.

Weitere AC-Batterien weisen eine Leistungselektronik-Topologie wie die erste AC-Batterie 1.1 auf oder sind entsprechend der M-ten AC-Batterie 1.M aufgebaut, bei der die parallel geschalteten DC-Batterien 2.M unmittelbar mit einem Wechselrichter 4.M verbunden sind, der an einen Transformator 7.M angeschlossen ist. Die unterschiedliche Topologie der einzelnen AC-Batterien 1.1 bzw. 1.M beruht beispielsweise auf einer unterschiedlichen Batterietechnologie und/oder einer unterschiedlichen Anzahl in Reihe geschalteter DC-Batterien der einzelnen DC-Batteriegruppen 2.1 bzw. 2.M.

Das AC-Batteriemanagement 5.1 bzw. 5.M der AC-Batterien 1.1 bis 1.M ist über eine Kommunikationsleitung 16 mit einem Leistungselektronikregler 40.1 bzw. 40.M verbunden, der bezüglich der ersten AC-Batterie 1.1 über eine Kommunikationsleitung 17 mit dem Wechselrichter 4.1 und über eine Kommunikationsleitung 18 mit dem Hochsetzsteller 3.1 bzw. bezüglich der M-ten AC-Batterie 1.1 über eine Kommunikationsleitung 17 mit dem Wechselrichter 4.M verbunden ist. Weiterhin ist das AC-Batteriemanagement 5.1 bzw. 5.M über eine Kommunikationsleitung 15 mit den Batteriemanagementsystemen 20.1 bzw. 20.M der DC-Batterien 2.1 bis 2.M verbunden.

Ein sämtliche AC-Batterien 1.1 bis 1.M zugeordnetes Batteriekraftwerkmanagement 6 ist über Kommunikationsleitungen 12 mit dem AC-Batteriemanagement 5.1 bis 5.M der AC-Batterien 1.1 bis 1.M sowie über eine Kommunikationsleitung 13 mit den den einzelnen AC-Batterien 1.1 bis 1.M zugeordneten Leistungsschaltern 8.1 bis 8.M und über eine Kommunikationsleitung 14 mit dem Netzanschlusspunkt-Leistungsschalter 9 verbunden.

Das AC-Batteriemanagement 5.1 - 5.N optimiert den Einsatz der Teilkomponenten der AC-Batterien 1.1 - 1.N und ermöglicht somit u.a. eine Wartung der Teilkomponenten im laufenden Betrieb, während das Batteriekraftwerkmanagement 6 das Zusammenspiel der AC-Batterien 1.1 - 1.N auf der Wechselstromseite regelt, die AC-Batterien 1.1 - 1.N kalibriert und die Anforderungen an das Batteriekraftwerk auf die einzelnen AC-Batterien 1.1 - 1.N derart verteilt, dass nach außen hin ein homogenes Batteriesystem sichtbar ist. Dabei können - wie nachstehend näher ausgeführt wird - sowohl AC-Batterien 1.1 - 1.N mit unterschiedlicher Leistungselektronik-Topologie als auch DC-Batterien mit unterschiedlicher Batterietechnologie bzw. unterschiedlichem Typs kombiniert und deren gemeinsamer Einsatz optimiert werden.

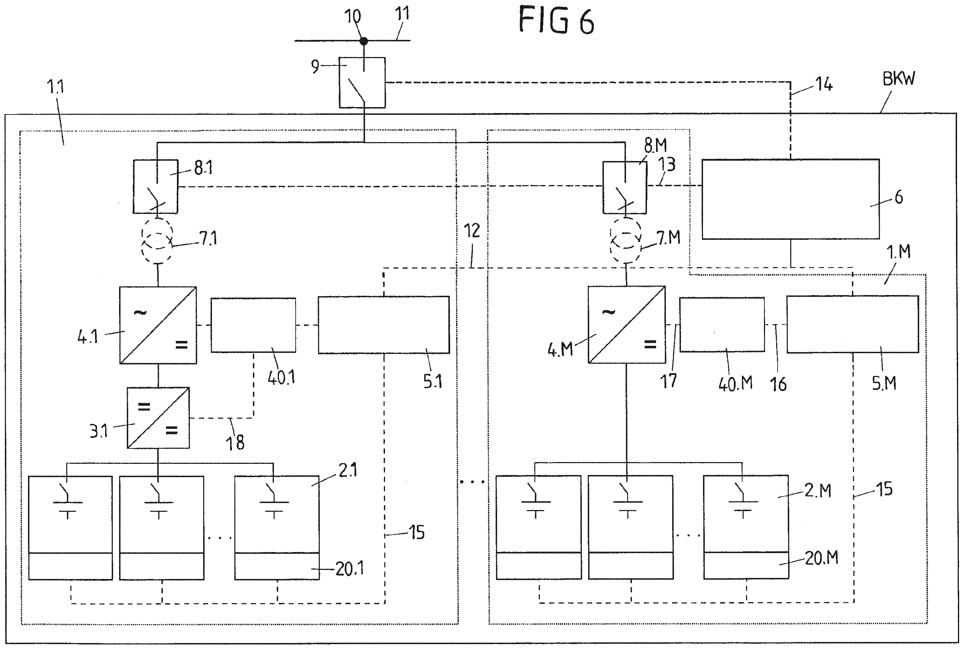

Figur 6 zeigt ein Blockschaltbild eines zweiten Ausführungsbeispiels eines Batteriekraftwerks BKW mit M parallel an einen Netzanschlusspunkt-Leistungsschalter 9 angeschlossenen, als Mittelspannungsbatterien ausgebildeten AC-Batterien 1.1 - 1.M, die bei übereinstimmendem Aufbau wie im ersten Ausführungsbeispiel gemäß Fig. 5 einen Mittelspannungs-Leistungsschalter 8.1 - 8.M und bedarfsweise einen gestrichelt dargestellten Mittelspannungs-Transformator 7.1 bis 7.M enthalten.

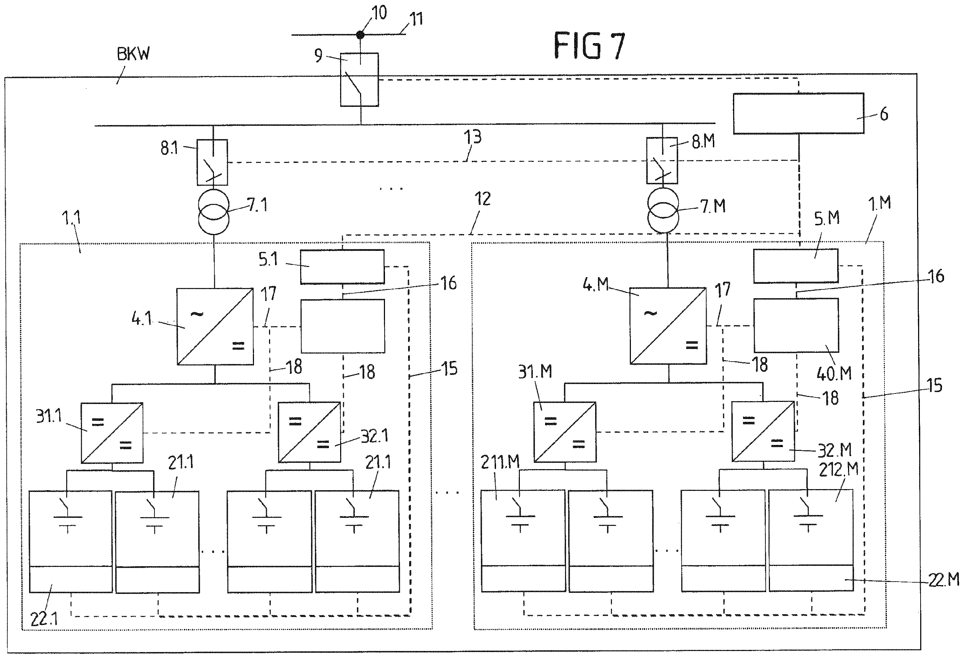

In einer in Fig. 7 in einem schematischen Blockschaltbild dargestellten dritten Ausführungsform eines Batteriekraftwerks BKW sind parallelgeschaltete DC-Batterien 21.1 bis 21.M gruppenweise an jeweils einen von zwei Hochsetzstellern 31.1, 32.1 bzw. 31.M, 32.M angeschlossen, die mit einem Wechselrichter 4.1 bzw. 4.M wie in der Ausführungsform gemäß Fig. 5 verbunden sind.

In dieser Ausführungsform können einzelne oder alle AC-Batterien 1.1 - 1.N DC-Batterien 21.1 - 21.M mit jeweils gleicher oder unterschiedlicher Batterietechnologie enthalten. So kann beispielsweise die AC-Batterie 1.1 DC-Batterien 21.1 mit gleicher Batterietechnologie aufweisen, während die AC-Batterie 1.N gruppenweise parallel geschaltete DC-Batterien 211.M, 212.M aufweist, deren Gruppen 211.M und 212.N die jeweils gleiche Batterietechnologie aufweisen bzw. vom gleichen Batterietyp sind, die aber von Gruppe zu Gruppe unterschiedlich ausgebildet sind.

Bei dieser Konfiguration einer AC-Batterie 1.N übernimmt das AC-Batteriemanagement 5.M die Steuerung und Überwachung der Gruppen 211.M, 212.N mit unterschiedlicher Batterietechnologie, nachdem dem AC-Batteriemanagement 5.M die entsprechenden Daten eingegeben wurden oder nachdem die in einer Gruppe vorgesehenen Batteriemanagementsysteme 22.M entsprechende Kennungsdaten an das AC-Batteriemanagement 5.M abgegeben haben.

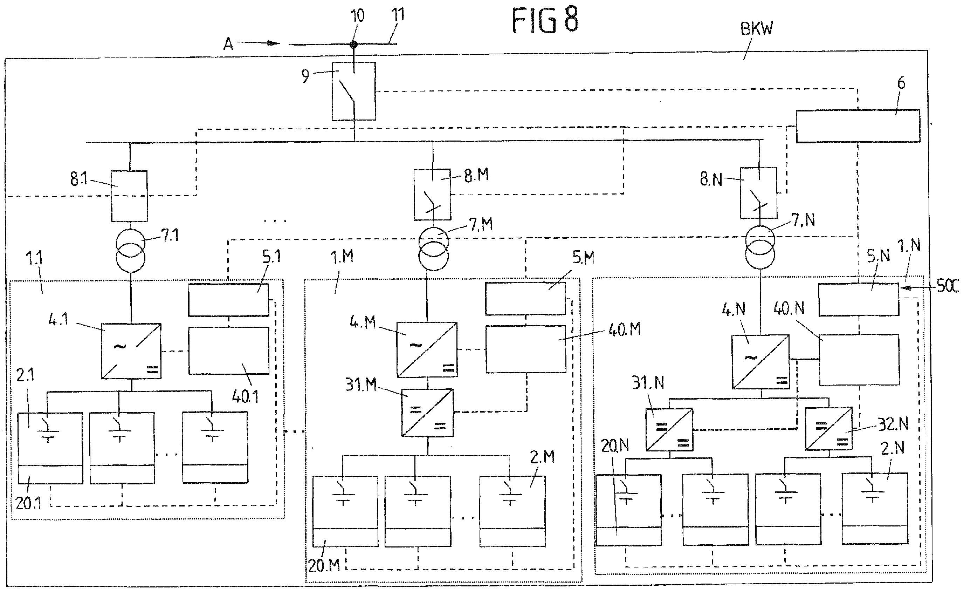

Eine vierte Ausführungsform ist schematisch als Blockschaltbild in Fig. 8 dargestellt. In dieser Ausführungsform eines Batteriekraftwerks BKW weist die AC-Batterie 1.1 an einen Wechselrichter 4.1 angeschlossene, parallel geschaltete DC-Batterien 2.1 auf, während die M-te AC-Batterie 1.M parallel geschaltete DC-Batterien 2.M oder aus einer Reihenschaltung mehrerer DC-Batterien gebildete DC-Batterie-Racks 2.M enthält, die an einen mit einem Wechselrichter 4.M verbundenen Hochsetzsteller 31.M angeschlossen, sind.

Eine N-te AC-Batterie 1.N ist analog zur Ausführungsform gemäß Fig. 7 mit gruppenweise zusammengefassten, parallel geschalteten DC-Batterien 2.N mit einem Batteriemanagementsystem 20.N über jeweils einen Hochsetzsteller 31.N, 32.N mit einem Wechselrichter 4.N verbunden. Die N-te AC-Batterie 1.N kann - wie vorstehend zur Fig. 7 ausgeführt wurde - gleiche oder unterschiedliche Batterietechnologien der DC-Batterien 2.N mit gleicher oder unterschiedlicher Batterietechnologie vereinen, die gruppenweise zusammengefasst an den einen oder anderen Hochsetzsteller 31.M, 32.M angeschlossen sind.

Selbstverständlich sind die Ausführungsformen gemäß den Fig. 7 und 8 nicht auf zwei jeweils an einen Hochsetzsteller 31.N, 32.N angeschlossenen Gruppen parallel geschalteter DC-Batterien 2.N mit gleicher oder unterschiedlicher Batterietechnologie beschränkt, sondern können mehrere an jeweils einen Hochsetzsteller angeschlossene Gruppen mit gleicher oder unterschiedlicher Batterietechnologie umfassen.

In allen, in den Fig. 5 bis 8 dargestellten Ausführungsbeispielen bildet das Batteriekraftwerkmanagement 6 die zentrale Steuerungsebene für das Batteriekraftwerk, in dem es die von den generischen AC-Batterien 1.1 bis 1.M bzw.1.N zur Verfügung gestellten Informationen wie beispielsweise hinsichtlich der Unbestimmtheit des Ladezustands zusammenführt, um in Abhängigkeit von den seitens des Energieversorgungsnetzes 11 zu erfüllenden Anforderungen bezüglich der Leistung, Energie bzw. Netzdienstleistung die Arbeitspunktvorgaben für die einzelnen AC-Batterien 1.1 bis 1.N zu optimieren.

Dabei hängt die Form der Parametrierung des Gesamtverhaltens vom jeweiligen Anwendungsfall des Batteriekraftwerks ab. Während im Inselnetzbetrieb Fahrpläne über das erwartete Leistungsband für einen Planungshorizont von Seiten eines Energiemanagementsystems zusammen mit dem gewünschten Regelverhalten um die sich einstellenden Arbeitspunkte kommuniziert werden und somit dem Batteriekraftwerkmanagement 6 eine Optimierung aufgrund von Fahrplänen ermöglicht, ergeben sich die Anforderungen beim Einsatz eines Batteriekraftwerks für Systemdienstleistungen in der Regelkraftwerksanwendung aus einem "Grid Code" und der aktuellen Netzfrequenz.

Ein Beispiel für die übergeordneten Betriebsführungsaufgaben des Batteriekraftwerkmanagements 6 zur Sicherung der Erfüllung äußerer Anforderungen am Netzanschlusspunkt 10 wie Vorgabe eines erwarteten Leistungsbandes und einer Leistungsstatik unter Berücksichtigung der inneren Anforderungen durch die einzelnen AC-Batterien 1.1 bis 1.N ist eine Kalibrierung des Ladezustands SOC der AC-Batterie 1.N gemäß Fig. 8, bei der das Batteriekraftwerk von dem übergeordneten Energiemanagementsystem für eine Fahrplandauer das vom Batteriekraftwerk abzudeckende Leistungsband nebst den gewünschten Betriebsstatiken am Netzanschlusspunkt 10 als Charakterisierung des Regelverhaltens des Batteriekraftwerks um die Arbeitspunkte am Netzanschlusspunkt 10 erhält.

Aufgrund von Vorgaben A am Netzanschlusspunkt 10 bestimmt das Batteriekraftwerkmanagement 6 angepasste Arbeitspunkte für die verbleibenden Batterien 1.1 bis 1.M zur Einhaltung der Vorgaben A am Netzanschlusspunkt 10 oder es muss die Ladezustandskalibrierung gegebenenfalls unter Bewertung der weiter steigenden Unbestimmtheit des Ladezustands des Batteriekraftwerks für die Dauer des Fahrplans verwerfen. Dabei müssen die Vorgaben A am Netzanschlusspunkt 10 in Übereinstimmung mit vom Batteriekraftwerkmanagement 6 berechneten möglichen Arbeitspunkten sowie den inneren Anforderungen der AC-Batterie 1.N wie der Planung einer Ladezustandskalibrierung SOC für die AC-Batterie 1.N, die in Form des geschätzten Leistungsfahrplans für die Dauer der Kalibrierung Einschränkungen für den Betrieb der AC-Batterie 1.N darstellen, stehen.

Weitere Anforderungen an das Batteriekraftwerkmanagement 6 können aus der
- Handhabung von unterschiedlichen Batterietechnologien über das generische AC-Batteriemodel,
- Verteilung zentraler Messgrößen zur Erzielung stationärer Genauigkeit an dem Netzanschlusspunkt 10 sowie
- Optimierung der AC-Batterie-Arbeitspunkte auf der Grundlage von Fahrplänen bzw. abgeleiteten Führungsgrößen
bestehen.

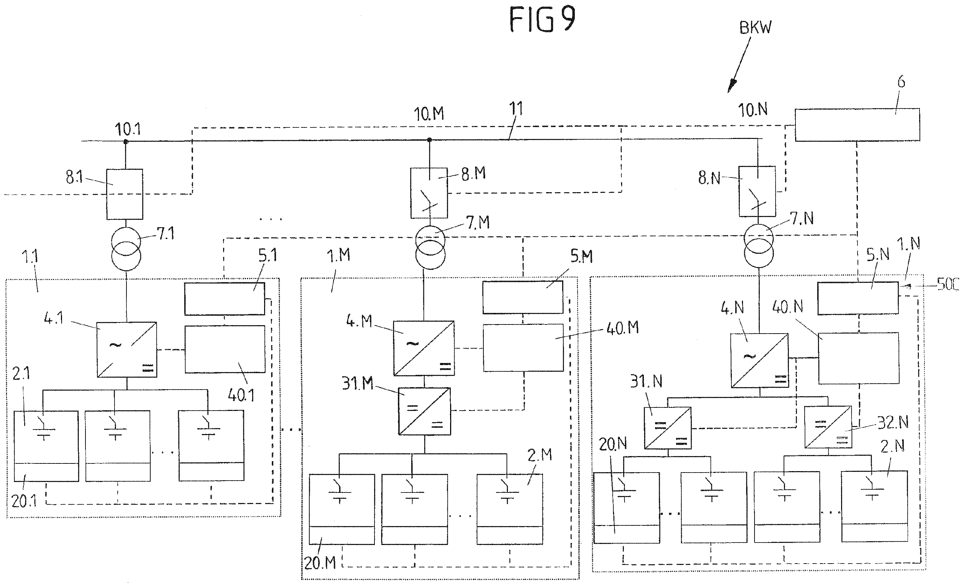

Das Batteriekraftwerk BKW muss nichtnotwendigerweise an einem Ort installiert sein, sondern kann auch aus vielen räumlich voneinander entfernt angeordneten AC-Batterien bzw. Einheiten zusammengesetzt werden. Ein Beispiel hierfür ist in Fig. 9 dargestellt.

Fig. 9 zeigt in Abwandlung des in Fig. 8 schematisch dargestellten Batteriekraftwerks mehrere über jeweils einen Mittelspannungs-Transformator 7.1 bis 7.N und jeweils einen Mittelspannungs-Leistungsschalter 8.1 bis 8.N an Netzanschlusspunkte 10.1, 10.M und 10.N eines Energieversorgungsnetzes 11 angeschlossene AC-Batterien 1.1 bis 1.N, die mit ihren zugehörigen Netzanschlusspunkten 10.1 bis 10.N räumlich weit voneinander entfernt sein können, insgesamt aber ein Batteriekraftwerk BKW ergeben.

Analog zur Konfiguration eines Batteriekraftwerks BKW gemäß Fig. 8 ist das AC-Batteriemanagement 5.1 bis 5.N der AC-Batterien 1.1 bis 1.N mit einem Batteriekraftwerk-Management 6 über Kommunikationsleitungen verbunden, dass die die AC-Batterien 1.1 bis 1.N mit dem Energieversorgungsnetz 11 verbindenden oder von diesem trennenden Mittelspannungs-Leistungsschalter 8.1 bis 8.N ansteuert. Das Batteriekraftwerk-Management 6 stellt die zentrale Steuerungsebene für das aus den einzelnen AC-Batterien 1.1 bis 1.N zusammengesetzte Batteriekraftwerk BKW dar und führt die von den AC-Batterien 1.1 bis 1.N zur Verfügung gestellten Informationen unter anderem bezüglich der Unbestimmtheit des Ladezustands der einzelnen AC-Batterien 1.1 bis 1.N bzw. deren DC-Batterien 2.1 bis 2.N zusammen, wobei die an den Energietransfer- und Kommunikations-Schnittstellen übereinstimmende Konfiguration der AC-Batterien 1.1 bis 1.N nicht nur eine einfache Konfiguration bzw. Programmierung der Steuerungsebene des Batteriekraftwerk-Managements 6 sicherstellt, sondern auch in Abhängigkeit von den seitens des Energieversorgungsnetzes 11 zu erfüllenden Anforderungen bezüglich der Leistung, Energie oder Netzdienstleistung wie Konstanthaltung der Netzfrequenz die Arbeitspunktvorgaben für die einzelnen AC-Batterien 1.1 bis 1.N optimiert.

### Bezugszeichenliste

- 1.1 - 1.N: AC-Batterien
- 2.1 - 2.N: DC-Batterien
- 3.1: Hochsetzsteller
- 4.1 - 4.N: Wechselrichter
- 5.1 - 5.N: AC-Batteriemanagement
- 6: Batteriekraftwerkmanagement
- 7.1 - 7.N: Transformatoren
- 8.1 - 8.N: Leistungsschalter
- 9: Netzanschlusspunkt-Leistungsschalter
- 10;10.1, 10.M,10.N: Netzanschlusspunkt
- 11: Energieversorgungsnetz
- 12-17: Kommunikationsleitungen
- 20.1 - 20.N: Batteriemanagementsysteme
- 21.1 - 21.M: parallelgeschaltete DC-Batterien
- 31.1 - 32.M: Hochsetzsteller
- 40.1 - 40.N: Leistungselektronikregler
- 211.M, 212.M: DC-Batterien unterschiedlicher Batterietechnologie
- A: Vorgaben
- BKW: Batteriekraftwerk
- I: Ladestrom
- P_{g}: Geschätzte Ladeleistung
- Pₜ: tatsächliche Ladeleistung
- SOC: Ladezustandskalibrierung
- V: Ladespannung

## Patentansprüche

1. Verfahren zur Speicherung elektrischer Energie in elektrochemischen Energiespeichern mit unterschiedlicher Batterietechnologie, die zum Austausch elektrischer Energie mit einem elektrischen Energieversorgungsnetz über jeweils ein Leistungselektroniksystem mit dem elektrischen Energieversorgungsnetz verbunden sind,
**dadurch gekennzeichnet,**
**dass** elektrochemische Energiespeicher (2.1 -2.N; 21.1 -21.M; 211.M, 212.M) mit jeweils gleicher Batterietechnologie und mit den elektrochemischen Energiespeichern (2.1 - 2.N; 21.1 -21.M; 211.M, 212.M) verbundene Leistungselektroniksysteme (3.1; 4.1 - 4.N; 31.1 - 31.M; 31.N, 32.N) mit jeweils gleicher Topologie zu abstrakten AC-Batterien (1.1 - 1.N) zusammengefasst werden, die sich unabhängig von der Batterietechnologie der elektrochemischen Energiespeicher (2.1 - 2.N; 21.1 - 21.M; 211.M, 212.M) und der Topologie der Leistungselektroniksysteme (3.1; 4.1 - 4.N; 31.1 - 31.M; 31.N, 32.N) gegenüber dem elektrischen Energieversorgungsnetz (11) identisch verhalten und ein AC-Batteriemanagement (5.1 - 5.N) aufweisen, das mit Batteriemanagementsysteme (20.1 -20.N) gruppenweise zusammengefasster elektrochemischer Energiespeicher (2.1 - 2.N; 21.1 - 21.M; 211.M, 212.M) und mit Regeleinrichtungen (40.1 - 40.N) der Leistungselektroniksysteme (3.1; 4.1 -4.N; 31.1 - 31.M; 31.N, 32.N)verbunden ist, wobei die AC-Batteriemanagements (5.1 - 5.N) der AC-Batterien (1.1 - 1.N) die Batterietechnologie der elektrochemischen Energiespeicher (2.1 - 2.N; 21.1 - 21.M; 211.M, 212.M) und die Topologie der Leistungselektroniksysteme (3.1; 4.1 - 4.N; 31.1 - 31.M; 31.N, 32.N) charakterisierende Daten erfassen und in für das elektrische Energieversorgungsnetz (11)) relevante Größen wie aktuell verfügbare und maximal erbringbare Leistung und aktuell aufnehmbare und abgebbare Energie transferieren und über Kommunikationsschnittstellen (12) an ein Batteriekraftwerk-Managementsystem (6) des elektrischen Energieversorgungsnetzes (11) ausgeben, das den Einsatz und die Aufgaben auf die verschiedenen AC-Batterien verteilt und optimiert.

2. Verfahren nach Anspruch 1, **dadurch gekennzeichnet, dass** die AC-Batterien (1.1 - 1.N) mittels der AC-Batteriemanagements (5.1 -5.N) gesteuert, überwacht und geregelt werden.

3. Verfahren nach Anspruch 1 oder 2, **dadurch gekennzeichnet, dass** mehrere AC-Batterien (1.1 bis 1.N) über die Kommunikationsschnittstellen (12) mit dem Batteriekraftwerk-Managementsystem (6) und über jeweils einen Leistungsschalter (8.1 bis 8.N) und einen gemeinsamen Netzanschlusspunkt-Leistungsschalter (9) mit einem Netzanschlusspunkt (10) des Energieversorgungsnetzes (11) und mehrere räumlich getrennte AC-Batterien (1.1 bis 1.N) an einen Netzanschlusspunkt (10) des elektrischen Energieversorgungsnetzes (11) angeschlossen und über Kommunikationsleitungen (12) mit dem gemeinsamen Batteriekraftwerks-Managementsystem (6) verbunden werden.

4. Vorrichtung zur Durchführung eines Verfahrens nach den Ansprüchen 1 bis 3,
**gekennzeichnet durch**
mindestens ein Basismodul (AC-Batterien 1.1 - 1.N) mit
- einem elektrochemischen Energiespeichermodul mit gleiche chemische und/oder physikalische Eigenschaften aufweisenden Gleichstrombatterien (DC-Batterien 2.1 - 2.N, 21.1 - 21.M),
- einem die DC-Batterien (2.1 - 2.N, 21.1 - 21.M) steuernden und überwachenden Batteriemanagementsystem (20.1 - 20.N),
- einem Leistungselektronikmodul (3.1, 4.1 - 4.N, 31.1 - 32.M),
- einer Leistungselektronikmodul-Regeleinrichtung (40.1 - 40.N) und
- einem AC-Batteriemanagement (5.1 - 5.N) mit Kommunikationsschnittstellen (15) zum Batteriemanagementsystem (20.1 - 20.N).

5. Vorrichtung nach Anspruch 4, **dadurch gekennzeichnet, dass** die AC-Batterien (1.1 - 1.N) mehrere parallel geschaltete elektrochemische Energiespeichermodule mit gleiche chemische und/oder physikalische Eigenschaften aufweisenden DC-Batterien (2.1 - 2.N, 21.1 - 21.M) und mit einem jedem elektrochemischen Energiespeichermodul zugeordneten, das elektrochemische Energiespeichermodul steuernden und überwachenden Batteriemanagementsystem (20.1 - 20.N) aufweisen.

6. Vorrichtung nach Anspruch 4 oder 5, **dadurch gekennzeichnet, dass** die Leistungselektronikmodule (3.1, 4.1 - 4.N, 31.1 - 32.M) aus einem gleichstromseitig an die elektrochemischen Energiespeichermodule und wechselstromseitig unmittelbar oder über einen Mittelspannungstransformator (7.1 - 7.N) an eine Sammelschiene oder einen Netzanschlusspunkt (10) angeschlossenen Wechselrichter (4.1 - 4.N) bestehen.

7. Vorrichtung nach mindestens einem der vorangehenden Ansprüche 4 bis 6, **dadurch gekennzeichnet, dass** die Leistungselektronikmodule (3.1, 4.1 - 4.N, 31.1 - 32.M) aus mindestens einem an die elektrochemischen Energiespeichermodule angeschlossenen Hochsetzsteller (3.1, 31.1 - 32.M) und einem gleichstromseitig an den oder die Hochsetzsteller (3.1, 31.1 - 32.M) und wechselstromseitig unmittelbar oder über einen Mittelspannungs-transformator (7.1 - 7.N) an eine Sammelschiene oder einen Netzanschlusspunkt (10) angeschlossenen Wechselrichter (4.1 - 4.N) bestehen.

8. Vorrichtung nach Anspruch 6 oder 7, **dadurch gekennzeichnet, dass** die AC-Batterien (1.1 - 1.N) mehrere gruppenweise parallel geschaltete elektrochemische Energiespeichermodule mit gleiche oder unterschiedliche chemische und/oder physikalische Eigenschaften aufweisenden DC-Batterien (2.1 - 2.N, 21.1 - 21.M) und mit einem jedem elektrochemischen Energiespeichermodul zugeordneten, jedes elektrochemische Energiespeichermodul steuernden und überwachenden Batteriemanagementsystem (20.1 - 20.N) aufweisen und dass die gruppenweise parallel geschalteten elektrochemischen Energiespeichermodule über einen jeder Gruppe zugeordneten Hochsetzsteller (3.1, 31.1 - 32.M) mit einem Wechselrichter (4.1 - 4.N) verbunden sind.

9. Vorrichtung nach mindestens einem der vorangehenden Ansprüche 4 bis 8, **dadurch gekennzeichnet, dass** die elektrochemischen Energiespeichermodule mehrere in Reihe geschaltete DC-Batterien (2.1 - 2.N, 21.1 - 21.M) mit gleichen chemischen und/oder physikalischen Eigenschaften aufweisen.

10. Vorrichtung nach mindestens einem der vorangehenden Ansprüche 4 bis 9, **dadurch gekennzeichnet, dass** die AC-Batterien (1.1 - 1.N) als Mittelspannungsbatterien ausgebildet sind und über das Leistungselektronikmodul (4.1 - 4.N) und einen Mittelspannungs-Leistungsschalter (8.1 - 8.N) mit einer Sammelschiene oder einem Netzanschlusspunkt (10) verbunden ist, wobei der Ausgang des Leistungselektronikmoduls (4.1 - 4.N) entweder unmittelbar oder über einen Mittelspannungstransformator (7.1 - 7.N) mit dem Mittelspannungs-Leistungsschalter (8.1 - 8.N) verbunden ist.

11. Vorrichtung nach Anspruch 9 oder 10, **dadurch gekennzeichnet, dass** die AC-Batterien (1.1 - 1.N) zwei elektrochemische Energiespeichermodule mit gleiche chemische und/oder physikalische Eigenschaften aufweisenden DC-Batterien (2.1 - 2.N, 21.1 - 21.M) enthalten, die mit jeweils einem Wechselrichter (4.1 - 4.N) verbunden sind und dass die Wechselrichter (4.1 - 4.N) an die Primärwicklungen eines sekundärseitig mit der Sammelschiene oder einem Netzanschlusspunkt (10) verbundenen Dreiwicklungstransformator angeschlossen sind.

12. Vorrichtung nach mindestens einem der vorangehenden Ansprüche 4 bis 11, **gekennzeichnet durch** mindestens zwei ein Batteriekraftwerk (BKW) bildende AC-Batterien (1.1 - 1.N), die unmittelbar oder über einen Mittelspannungs-Leistungsschalter (8.1 - 8.N) oder über einen Mittelspannungs-Leistungsschalter (8.1 - 8.N) und einen Mittelspannungs-transformator (7.1 - 7.N) an einen gemeinsamen Netzanschlusspunkt (10) angeschlossen sind und elektrochemische Energiespeichermodule (2.1 - 2.N) mit gleichen oder voneinander verschiedenen chemischen und/oder physikalischen Eigenschaften aufweisen.

13. Vorrichtung nach mindestens einem der vorangehenden Ansprüche 4 bis 12, **dadurch gekennzeichnet, dass** mindestens zwei ein Batteriekraftwerk (BKW) bildende AC-Batterien (1.1 - 1.N) unterschiedliche Topologien für die Leistungselektronikmodule (3.1, 4.1 - 4.N, 31.1 - 32.M) aufweisen.

14. Vorrichtung nach Anspruch 13, **dadurch gekennzeichnet, dass** die AC-Batterien (1.1 - 1.N)
- einen mit elektrochemischen Energiespeichermodulen (2.1) verbundenen Wechselrichter (4.1) und/oder
- einen mit parallel geschalteten elektrochemischen Energiespeichermodulen 2.N verbundenen Hochsetzsteller (31.N) und einen mit dem Hochsetzsteller (31.N) verbundenen Wechselrichter (4.N) und/oder
- gruppenweise parallel geschaltete elektrochemische Energiespeichermodule (2.N) und mit jeweils einem an einen Wechselrichter (4.N) angeschlossenen Hochsetzsteller (31.N, 32.N)
enthalten.

15. Vorrichtung nach mindestens einem der vorangehenden Ansprüche 4 bis 14, **dadurch gekennzeichnet, dass** das aus mehreren AC-Batterien (1.1 - 1.N) bestehende Batteriekraftwerk (BKW) als netzbildendes Kraftwerk die Spannung und Frequenz des Energieversorgungsnetzes (11) regelt und Kurzschlussströme zur Auslösung von Überstrom-Schutzmechanismen bereitstellt, wobei das Batteriekraftwerk (BKW) insbesondere als Leistungsquelle und Leistungssenke arbeitet und die von den AC-Batterien (1.1 - 1.N) an das Energieversorgungsnetz (11) abgegebene Leistung in Abhängigkeit von der Netzfrequenz des Energieversorgungsnetzes (11) geregelt wird.

16. Vorrichtung nach mindestens einem der vorangehenden Ansprüche 4 bis 15, **dadurch gekennzeichnet, dass** das AC-Batteriemanagement (5.1 - 5.N) über Kommunikationsschnittstellen (12) mit einem Batteriekraftwerk-Managementsystem (6) verbunden ist, das die Mittelspannungs-Leistungsschalter (8.1 - 8.N) und einen den Netzanschlusspunkt (10) mit dem Energieversorgungsnetz (11) verbindenden Netzanschlusspunkt-Leistungsschalter (9) ansteuert.

17. Batteriekraftwerk nach mindestens einem der vorangehenden Ansprüche 4 bis 16, **dadurch gekennzeichnet, dass** das Batteriekraftwerk (BKW) als Hybridkraftwerk im Verbund mit erneuerbaren Energiequellen betrieben wird und eine vorgegebene Leistung am Netzanschlusspunkt (10) des Energieversorgungsnetzes (11) in Abhängigkeit von der Netzfrequenz regelt.

## Claims

1. Method for storing electrical energy in electrochemical energy stores having different battery technologies and that are connected to an electrical energy supply grid via a respective power electronics system in order to exchange electrical energy with the electrical energy supply grid,
**characterized**
**in that** electrochemical energy stores (2.1 - 2.N; 21.1 - 21.M; 211.M, 212.M) in each case having identical battery technologies and power electronics systems (3.1; 4.1 - 4.N; 31.1 - 31.M; 31.N, 32.N) connected to the electrochemical energy stores (2.1 - 2.N; 21.1 - 21.M; 211.M, 212.M) and each having identical topologies are combined to form abstract AC batteries (1.1 - 1.N) that behave identically independently of the battery technology of the electrochemical energy stores (2.1 - 2.N; 21.1 - 21.M; 211.M, 212.M) and the topology of the power electronics systems (3.1; 4.1 - 4.N; 31.1 - 31.M; 31.N, 32.N) with respect to the electrical energy supply grid (11) and have an AC battery management unit (5.1 - 5.N) that is connected to battery management systems (20.1 - 20.N) of electrochemical energy stores (2.1 - 2.N; 21.1 - 21.M; 211.M, 212.M) that are combined into groups and to regulation devices (40.1 - 40.N) of the power electronics systems (3.1; 4.1 - 4.N; 31.1 - 31.M; 31.N, 32.N), wherein the AC battery management units (5.1 - 5.N) of the AC batteries (1.1 - 1.N) record data characterizing the battery technology of the electrochemical energy stores (2.1 - 2.N; 21.1 - 21.M; 211.M, 212.M) and the topology of the power electronics systems (3.1; 4.1 - 4.N; 31.1 - 31.M; 31.N, 32.N) and transfer amounts relevant to the electrical energy supply grid (11), such as currently available and maximum providable power and currently absorbable and outputtable energy and output them, via communication interfaces (12), to a battery plant management system (6) of the electrical energy supply grid (11) that distributes and optimizes the use and the tasks of the various AC batteries.

2. Method according to Claim 1, **characterized in that** the AC batteries (1.1 - 1.N) are controlled, monitored and regulated by way of the AC battery management unit (5.1 - 5.N).

3. Method according to Claim 1 or 2, **characterized in that** a plurality of AC batteries (1.1 to 1.N) are connected to the battery plant management system (6) via the communication interfaces (12) and to a grid connection point (10) of the energy supply grid (11) via a respective power switch (8.1 to 8.N) and a common grid connection point power switch (9), and a plurality of spatially separate AC batteries (1.1 to 1.N) are connected to a grid connection point (10) of the electrical energy supply grid (11) and are connected to the common battery plant management system (6) via communication lines (12).

4. Device for performing a method according to Claims 1 to 3,
**characterized by**
at least one base module (AC batteries 1.1 - 1.N) having
- an electrochemical energy storage module having DC batteries (DC batteries 2.1 - 2.N, 21.1 - 21.M) having identical chemical and/or physical properties,
- a battery management system (20.1 - 20.N) controlling and monitoring the DC batteries (2.1 - 2.N, 21.1 - 21.M),
- a power electronics module (3.1, 4.1 - 4.N, 31.1 - 32.M),
- a power electronics module regulation device (40.1 - 40.N) and
- an AC battery management unit (5.1 - 5.N) having communication interfaces (15) to the battery management system (20.1 - 20.N).

5. Device according to Claim 4, **characterized in that** the AC batteries (1.1 - 1.N) have a plurality of parallel-connected electrochemical energy storage modules having DC batteries (2.1 - 2.N, 21.1 - 21.M) having identical chemical and/or physical properties and having a battery management system (20.1 - 20.N) assigned to each electrochemical energy storage module and controlling and monitoring the electrochemical energy storage module.

6. Device according to Claim 4 or 5, **characterized in that** the power electronics modules (3.1, 4.1 - 4.N, 31.1 - 32.M) consist of an inverter (4.1 - 4.N) connected, on the DC current side, to the electrochemical energy storage modules and, on the AC current side, directly or via a medium-voltage transformer (7.1 - 7.N), to a busbar or a grid connection point (10).

7. Device according to at least one of preceding Claims 4 to 6, **characterized in that** the power electronics modules (3.1, 4.1 - 4.N, 31.1 - 32.M) consist of at least one boost converter (3.1, 31.1 - 32.M) connected to the electrochemical energy storage modules and an inverter (4.1 - 4.N) connected, on the DC current side, to the boost converter or converters (3.1, 31.1 - 32.M) and, on the AC current side, directly or via a medium-voltage transformer (7.1 - 7.N), to a busbar or a grid connection point (10).

8. Device according to Claim 6 or 7, **characterized in that** the AC batteries (1.1 - 1.N) have a plurality of electrochemical energy storage modules that are parallel-connected in groups and having DC batteries (2.1 - 2.N, 21.1 - 21.M) having identical or different chemical and/or physical properties and having a battery management system (20.1 - 20.N) assigned to each electrochemical energy storage module and controlling and monitoring each electrochemical energy storage module, and **in that** the electrochemical energy storage modules that are parallel-connected in groups are connected to an inverter (4.1 - 4.N) via a boost converter (3.1, 31.1 - 32.M) assigned to each group.

9. Device according to at least one of preceding Claims 4 to 8, **characterized in that** the electrochemical energy storage modules have a plurality of series-connected DC batteries (2.1 - 2.N, 21.1 - 21.M) having identical chemical and/or physical properties.

10. Device according to at least one of preceding Claims 4 to 9, **characterized in that** the AC batteries (1.1 - 1.N) are designed as medium-voltage batteries and are connected to a busbar or a grid connection point (10) via the power electronics module (4.1 - 4.N) and a medium-voltage power switch (8.1 - 8.N), wherein the output of the power electronics module (4.1 - 4.N) is connected to the medium-voltage power switch (8.1 - 8.N) either directly or via a medium-voltage transformer (7.1 - 7.N) .

11. Device according to Claim 9 or 10, **characterized in that** the AC batteries (1.1 - 1.N) contain two electrochemical energy storage modules having DC batteries (2.1 - 2.N, 21.1 - 21.M) having identical chemical and/or physical properties and that are connected to a respective inverter (4.1 - 4.N), and **in that** the inverters (4.1 - 4.N) are connected to the primary windings of a three-winding transformer that is connected, on the secondary side, to the busbar or a grid connection point (10).

12. Device according to at least one of preceding Claims 4 to 11, **characterized by** at least two AC batteries (1.1 - 1.N) forming a battery plant (BKW) and that are connected to a common grid connection point (10) directly or via a medium-voltage power switch (8.1 - 8.N) or via a medium-voltage power switch (8.1 - 8.N) and a medium-voltage transformer (7.1 - 7.N), and have electrochemical energy storage modules (2.1 - 2.N) having identical or mutually different chemical and/or physical properties.

13. Device according to at least one of preceding Claims 4 to 12, **characterized in that** at least two AC batteries (1.1 - 1.N) forming a battery plant (BKW) have different topologies for the power electronics modules (3.1, 4.1 - 4.N, 31.1 - 32.M).

14. Device according to Claim 13, **characterized in that** the AC batteries (1.1 - 1.N) contain
- an inverter (4.1) connected to electrochemical energy storage modules (2.1) and/or
- a boost converter (31.N) connected to parallel-connected electrochemical energy storage modules (2.N) and an inverter (4.N) connected to the boost converter (31.N) and/or
- electrochemical energy storage modules (2.N) that are parallel-connected in groups and each having at least one boost converter (31.N, 32.N) connected to an inverter (4.N).

15. Device according to at least one of preceding Claims 4 to 14, **characterized in that** the battery plant (BKW) consisting of a plurality of AC batteries (1.1 - 1.N), as a plant forming a grid, regulates the voltage and frequency of the energy supply grid (11) and provides short-circuit currents in order to trigger overcurrent protection mechanisms, wherein the battery plant (BKW) operates in particular as a power source and power sink and the power output by the AC batteries (1.1 - 1.N) to the energy supply grid (11) is regulated depending on the grid frequency of the energy supply grid (11).

16. Device according to at least one of preceding Claims 4 to 15, **characterized in that** the AC battery management unit (5.1 - 5.N) is connected, via communication interfaces (12), to a battery plant management system (6) that drives the medium-voltage power switches (8.1 - 8.N) and a grid connection point power switch (9) connecting the grid connection point (10) to the energy supply grid (11).

17. Battery plant according to at least one of preceding Claims 4 to 16, **characterized in that** the battery plant (BKW) is operated as a hybrid plant in connection with renewable energy sources and regulates a predefined power on the grid connection point (10) of the energy supply grid (11) depending on the grid frequency.

## Revendications

1. Procédé pour l'accumulation d'énergie électrique dans des accumulateurs d'énergie électrochimiques avec une technologie des batteries différente, lesquels, pour l'échange d'énergie électrique avec un réseau d'alimentation en énergie électrique, sont reliés respectivement via un système d'électronique de puissance au réseau d'alimentation en énergie électrique,
**caractérisé en ce que**
des accumulateurs d'énergie électrochimiques (2.1-2.N; 21.1-21.M; 211.M, 212.M) avec respectivement une même technologie des batteries et des systèmes d'électronique de puissance (3.1; 4.1-4.N; 31.1-31.M; 31.N, 32.N) avec respectivement une topologie identique reliés aux accumulateurs d'énergie électrochimiques (2.1-2.N; 21.1-21.M; 211.M, 212.M) sont regroupés en batteries CA abstraites (1.1-1.N), lesquelles se comportent de manière identique par rapport au réseau d'alimentation en énergie électrique (11) indépendamment de la technologie des batteries des accumulateurs d'énergie électrochimiques (2.1-2.N; 21.1-21.M; 211.M, 212.M) et de la topologie des systèmes d'électronique de puissance (3.1; 4.1-4.N; 31.1-31.M; 31.N, 32.N), et présentent une gestion de batteries CA (5.1-5.N) qui est reliée à des systèmes de gestion de batteries (20.1-20.N) d'accumulateurs d'énergie électrochimiques (2.1-2.N; 21.1-21.M; 211.M, 212.M) regroupés par groupes et à des dispositifs de régulation (40.1-40.N) des systèmes d'électronique de puissance (3.1; 4.1-4.N; 31.1- 31.M; 31.N, 32.N), dans lequel les gestions de batteries CA (5.1-5.N) des batteries CA (1.1-1.N) recueillent des données caractérisant la technologie des batteries des accumulateurs d'énergie électrochimiques (2.1-2.N; 21.1-21.M; 211.M, 212.M) et la topologie des systèmes d'électronique de puissance (3.1; 4.1-4.N; 31.1-31.M; 31.N, 32.N) et les transfèrent dans des grandeurs pertinentes pour le réseau d'alimentation en énergie électrique (11) telles qu'une puissance actuellement disponible et pouvant être fournie au maximum et une énergie actuellement absorbable et restituable et les font sortir via des interfaces de communication (12) à l'attention d'un système de gestion de centrale de batteries (6) du réseau d'alimentation en énergie électrique (11), lequel répartit l'emploi et les tâches entre les différentes batteries CA et les optimise.

2. Procédé selon la revendication 1, **caractérisé en ce que** les batteries CA (1.1-1.N) sont commandées, surveillées, et régulées au moyen des gestions de batteries CA (5.1-5.N).

3. Procédé selon la revendication 1 ou 2, **caractérisé en ce que** plusieurs batteries CA (1.1 à 1.N) sont raccordées via les interfaces de communication (12) au système de gestion de centrale de batteries (6) et via respectivement un sectionneur de puissance (8.1 à 8.N) et un sectionneur de puissance de point de raccordement au réseau commun (9) à un point de raccordement au réseau (10) du réseau d'alimentation en énergie (11) et plusieurs batteries CA (1.1 à 1.N) séparées spatialement sont raccordées à un point de raccordement au réseau (10) du réseau d'alimentation en énergie électrique (11) et sont reliées via des lignes de communication (12) au système de gestion de centrale de batteries commun (6).

4. Dispositif pour la mise en œuvre d'un procédé selon les revendications 1 à 3
**caractérisé par**
au moins un module de base (batteries CA 1.1 - 1.N) avec
- un module d'accumulation d'énergie électrochimique avec des batteries à courant continu (batteries CC 2.1 - 2.N, 21.1 - 21.M) présentant des propriétés chimiques et/ou physiques identiques,
- un système de gestion de batteries (20.1 - 20.N) qui commande et surveille les batteries CC (2.1-2.N, 21.1-21.M),
- un module d'électronique de puissance (3.1, 4.1-4.N, 31.1-32.M),
- un dispositif de réglage de module d'électronique de puissance (40.1-40.N) et
- une gestion de batteries CA (5.1-5.N) avec des interfaces de communication (15) avec le système de gestion de batteries (20.1-20.N).

5. Dispositif selon la revendication 4, **caractérisé en ce que** les batteries CA (1.1 - 1.N) présentent plusieurs modules d'accumulation d'énergie électrochimiques connectés en parallèle avec des batteries CC (2.1-2.N, 21.1-21.M) présentant des propriétés chimiques et/ou physiques identiques et avec un système de gestion de batteries (20.1-20.N) associé à chaque module d'accumulation d'énergie électrochimique, commandant et surveillant le module d'accumulation d'énergie électrochimique.

6. Dispositif selon la revendication 4 ou 5, **caractérisé en ce que** les modules d'électronique de puissance (3.1, 4.1-4.N, 31.1-32.M) se composent d'un onduleur (4.1-4.N) raccordé côté courant continu aux modules d'accumulation d'énergie électrochimiques et côté courant alternatif, directement ou via un transformateur moyenne tension(7.1-7.N), à une barre collectrice ou un point de raccordement au réseau (10).

7. Dispositif selon l'une au moins des revendications 4 à 6 précédentes, **caractérisé en ce que** les modules d'électronique de puissance (3.1, 4.1-4.N, 31.1-32.M) se composent d'au moins un convertisseur élévateur (3.1, 31.1-32.M) raccordé aux modules d'accumulation d'énergie électrochimiques et d'un onduleur (4.1-4.N) raccordé côté courant continu à ce ou ces convertisseurs élévateurs (3.1, 31.1-32.M) et côté courant alternatif, directement ou via un transformateur moyenne tension(7.1-7.N), à une barre collectrice ou un point de raccordement au réseau (10).

8. Dispositif selon la revendication 6 ou 7, **caractérisé en ce que** les batteries CA (1.1-1.N) présentent plusieurs modules d'accumulation d'énergie électrochimiques connectés en parallèle par groupes avec des batteries CC (2.1-2.N, 21.1-21.M) présentant des propriétés chimiques et/ou physiques identiques ou différentes et avec un système de gestion de batteries (20.1-20.N) associé à chaque module d'accumulation d'énergie électrochimique, commandant et surveillant chaque module d'accumulation d'énergie électrochimique, et que les modules d'accumulation d'énergie électrochimiques connectés en parallèle par groupes sont reliés, via un convertisseur élévateur (3.1, 31.1-32.M) associé à chaque groupe, à un onduleur (4.1-4.N).

9. Dispositif selon l'une au moins des revendications 4 à 8 précédentes, **caractérisé en ce que** les modules d'accumulation d'énergie électrochimiques présentent plusieurs batteries CC (2.1-2.N, 21.1-21.M) connectées en série avec des propriétés chimiques et/ou physiques identiques.

10. Dispositif selon l'une au moins des revendications 4 à 9 précédentes, **caractérisé en ce que** les batteries CA (1.1-1.N) sont réalisées en tant que batteries moyenne tension et sont reliées via le module d'électronique de puissance (4.1-4.N) et un sectionneur de puissance moyenne tension(8.1-8.N) à une barre collectrice ou un point de raccordement au réseau (10), dans lequel la sortie du module d'électronique de puissance (4.1-4.N) est reliée directement ou via un transformateur moyenne tension (7.1-7.N) au sectionneur de puissance moyenne tension (8.1-8.N).

11. Dispositif selon la revendication 9 ou 10, **caractérisé en ce que** les batteries CA (1.1-1.N) comprennent deux modules d'accumulation d'énergie électrochimiques avec des batteries CC (2.1-2.N, 21.1-21.M) présentant des propriétés chimiques et/ou physiques identiques, lesquelles sont respectivement reliées à un onduleur (4.1-4.N), et que les onduleurs (4.1-4.N) sont raccordés aux enroulements primaires d'un transformateur à trois enroulements relié côté secondaire à la barre collectrice ou à un point de raccordement au réseau (10).

12. Dispositif selon l'une au moins des revendications 4 à 11 précédentes, **caractérisé par** au moins deux batteries CA (1.1-1.N) formant une centrale de batteries (BKW), lesquelles sont raccordées directement ou via un sectionneur de puissance moyenne tension (8.1-8.N) ou via un sectionneur de puissance moyenne tension (8.1-8.N) et un transformateur moyenne tension (7.1-7.N) à un point de raccordement au réseau commun (10) et présentent des modules d'accumulation d'énergie électrochimiques (2.1-2.N) avec des propriétés chimiques et/ou physiques identiques ou différentes les unes des autres.

13. Dispositif selon l'une au moins des revendications 4 à 12 précédentes, **caractérisé en ce qu**'au moins deux batteries CA (1.1-1.N) formant une centrale de batteries (BKW) présentent des topologies différentes pour les modules d'électronique de puissance (3.1, 4.1-4.N, 31.1-32.M).

14. Dispositif selon la revendication 13, **caractérisé en ce que** les batteries CA (1.1-1.N) comprennent
- un onduleur (4.1) relié à des modules d'accumulation d'énergie électrochimiques (2.1) et/ou
- un convertisseur élévateur (31.N) relié à des modules d'accumulation d'énergie électrochimiques 2.N connectés en parallèle et un onduleur (4.N) relié au convertisseur élévateur (31.N) et/ou
- des modules d'accumulation d'énergie électrochimiques (2.N) connectés en parallèle par groupes et avec respectivement un convertisseur élévateur (31.N, 32.N) raccordé à un onduleur (4.N).

15. Dispositif selon l'une au moins des revendications 4 à 14 précédentes, **caractérisé en ce que** la centrale de batteries (BKW) se composant de plusieurs batteries CA (1.1-1.N) régule, en tant que centrale formant un réseau, la tension électrique et la fréquence du réseau d'alimentation en énergie (11) et met à disposition des courants de court-circuit pour le déclenchement de mécanismes de protection contre les surintensités, dans lequel la centrale de batteries (BKW) travaille en particulier en tant que source de puissance et réducteur de puissance, et la puissance fournie par les batteries CA (1.1-1.N) au réseau d'alimentation en énergie (11) est régulée en fonction de la fréquence réseau du réseau d'alimentation en énergie (11).

16. Dispositif selon l'une au moins des revendications 4 à 15 précédentes, **caractérisé en ce que** la gestion de batteries CA (5.1-5.N) est reliée via des interfaces de communication (12) à un système de gestion de centrale de batteries (6), lequel commande les sectionneurs de puissance moyenne électrique (8.1-8.N) et un sectionneur de puissance de point de raccordement au réseau (9) reliant le point de raccordement au réseau (10) et le réseau d'alimentation en énergie (11).

17. Centrale de batteries selon l'une au moins des revendications 4 à 16 précédentes, **caractérisée en ce que** la centrale de batteries (BKW) est exploitée en tant que centrale hybride en combinaison avec des sources d'énergies renouvelables et régule une puissance prescrite au point de raccordement au réseau (10) du réseau d'alimentation en énergie (11) en fonction de la fréquence du réseau.
